# EUROPEAN PATENT APPLICATION

(11) **EP 3 275 532 A1**
(43) Date of publication of application: **31.01.2018**
(21) Application number: 16181972.7
(22) Date of filing: 29.07.2016
(51) Int. Cl.: B01F 5/02, B01F 5/10, B01F 13/02, B01F 15/02, B01F 3/12, F16K 11/07, B65G 53/12, B65G 53/16

(54) **A SYSTEM AND A METHOD FOR SUPPLYING POWDER AND MIXING THE POWDER INTO A LIQUID**

(71) Applicant: Daniatech ApS, 5683 Harby (DK)
(72) Inventor: HARBO, Erik Dath, 8210 Aarhus (DK); ANDERSEN, Jens Nygaard, 9000 Aalborg (DK)
(74) Representative: Nielsen, Henrik Sten

(57) **Abstract**

A system (10) for supplying powder (14) and mixing powder (14) into a liquid comprises a pressure container (12), a pressurizing source (32) and a mixing tank (42). The pressure container (12) comprises a powder inlet (26) and a powder outlet (28), and an air inlet (36) for receiving pressurized air from the pressurizing source (32) to enter the interior of the pressure container (12) for maintaining a first pressure level within the pressure container (12). The mixing tank (42) has a pressure relief valve (48) for preserving a second pressure level inside the mixing tank (42), where the second pressure level is lower than the first pressure level. A connecting pipe (30) is provided and has a powder inlet end (38) and a powder outlet end (40). The powder inlet end (38) is connected to the pressure container (12) and the powder outlet end (40) is connected to the mixing tank (42). The connecting pipe (30) allows pressurized air to be utilized for transporting the powder (14) from the pressure container (12) to the mixing tank (42) through the connecting pipe (30). An openable/closable powder valve (44) is provided and arranged between the powder outlet end (40) and the mixing tank (42) and constitutes an inlet port to the mixing tank (42). The powder valve (44) is in fluid communication with the interior of the mixing tank (42), and is positioned at the lower part of the mixing tank (42). The powder valve (44) is used for injecting the powder (14) directly into the liquid contained in the mixing tank (42).

## Description

### TECHNICAL FIELD

The present invention relates to a system for supplying powder and mixing the powder into a liquid, in which a powder valve is used for injecting powder to the mixing tank, and in which the powder is injected below the liquid level in the mixing tank.

### BACKGROUND OF THE INVENTION

It has been known for the last decades to supply powder to a mixing tank, in which a valve is used to deliver the powder into the interior of a mixing tank from a position above the liquid level. It is essential that the dry powder does not come into contact with the fluid and that the valve is kept clean of any remains. Different types of powder valves have been suggested for the purpose.

Through the use of pressure difference between the inlet of the mixing tank and the interior compartment of a mixing, it is possible to introduce powder into the mixing tank. One method of introducing powder into the wet environment of the mixing tank or mixing vessel, comprises utilizing a vacuum inside the mixing tank, hereby allowing powder to be transported into the interior of the mixing tank.

An example to this type can be found in WO2007/095951 A1, which discloses a powder valve having a closing body. The valve is used for injecting dry powder into a mixing tank, in which the powder is mixed with liquid in the mixing tank. The valve is located below the liquid level of the mixing tank.

The disadvantages of this mixing system and the powder valve are that the powder has to be feed into the mixing tank through the use of vacuum. When vacuum is used for feeding powder into a mixing system, it is not possible to work with tanks under pressure, which is needed in many production processes.

Another drawback is that the powder valve will have a tendency to be blocked due to the low pressure difference between the mixing tank/mixer and the pressure container used for storage of the powder to be mixed.

Still another drawback of the powder valve described in the prior art is the fact that due to the pressure drop, the air flow needed for transporting the powder has to be sucked through the powder in order for the air to work as a medium for transporting the powder.

The general object of the present invention is to provide a solution according to which pressurized air is used for injecting powder into the mixing system.

It is an object of the present invention to provide a system according to a first aspect of the present invention for supplying powder and mixing the powder into a liquid comprising a pressure container, a pressurizing source and a mixing tank,
- the pressure container comprising an powder inlet and a powder outlet, the pressure container further comprising an air inlet for receiving pressurized air from the pressurizing source to enter the interior of the pressure container for maintaining a first pressure level within the pressure container,
- the mixing tank having a pressure relief valve for preserving a second pressure level inside the mixing tank, the second pressure level being lower than the first pressure level,
- a connecting pipe being provided and having a powder inlet end and a powder outlet end, the powder inlet end being connected to the pressure container and the powder outlet end being connected to the mixing tank, the connecting pipe allows pressurized air to be utilized for transporting the powder from the pressure container to the mixing tank through the connecting pipe,
- an openable/closable powder valve being provided and arranged between the powder outlet end and the mixing tank and constituting an inlet port to the mixing tank, and
- the powder valve being in fluid communication with the interior of the mixing tank, and being positioned at the lower part of the mixing tank, the powder valve being used for injecting the powder directly into the liquid contained in the mixing tank.

A further object of the present invention is to provide a powder valve, which is cleaned without additional dismantling and subsequent manual cleaning.

The powder valve has a design with a layout, without any dead zones in which the powder can collect.

The present invention is primarily directed towards a system for supplying powder and mixing the powder into a liquid and provides a simpler construction of a mixing system in which a powder valve is used for injecting powder into the interior of a mixing arrangement using a pressurizing source.

The advantageous aspect according to the first aspect of the present invention is that the distance between the pressure container containing the powder and the mixing tank may to any substantial extent be eliminated due to the fact that the air flow needed for transporting the powder does not have to be sucked through the powder when used for transporting the powder to the mixing tank. This provides the option and freedom when determining the layout of a production facility, as the pressure container for storage of the powder does not need to be within 5-15 meter of the mixing tank.

A further advantage is that the air flow needed for transporting the powder is reduced and thereby the energy needed to operate the system for supplying powder and mixing the liquid mixture can also be reduced compared to the prior known system.

A further advantage of the present invention is that it can operate in a closed pipe system, whereby loss in powder and contamination to and from the surrounding environment is reduced or eliminated. Air contamination can be eliminated as the powder in not in direct contact with the air in the production hall.

Fully automatic cleaning saves time and money. It is not necessary to constantly dismantle and manually clean the components. CIP (cleaning in place) cleaning is particularly advantageous for components which are difficult to access.

By injecting the powder into the liquid from a position below the liquid level, a better and more rapid mixing of powder and liquid is achieved. Disposition of powder on the inner surface of the mixing tank is also avoided, hereby a more precise mixing is obtained. Precise mixing is especially important in the food, cosmetic, biotech and pharmaceutical industry. E.g. in the pharmaceutical industry, the active ingredients need to be dosed correctly in order to achieve the correct mixing ration allowing the medicine to serve the intended effect for the patient.

In a further embodiment of the system according to the first aspect of the present invention, the powder tank for storage of the powder is provided and connected to the pressure container. Through the use of the powder tank, dosing of the powder continuously from e.g. a silo, big-bag or the like into the pressure container is readily achieved. Hereby the powder is transferred continuously to the mixing tank, and the dosing of the powder is regulated by using pressure difference between the mixing tank and the pressure container, e.g. weight, level sensor.

In one embodiment of the system according to the first aspect of the present invention, a dosing unit is provided and arranged between the powder tank and the pressure container for adjusting the powder ratio inside the pressure container. Through the use of a dosing unit it is possible to obtain a more precisely dosing of the powder into the mixing tank. The dosing unit may be implemented in accordance with any suitable dosing unit for transferring powder, e.g. a screw driven type, screw or vibration conveyor type, rotary valve or the like.

In a further embodiment of the system according to the first aspect of the present invention, an additional pressure container is provided and arranged between the pressure container and the mixing tank, the pressure container including two different types of powders or the additional pressure container constituting a buffer tank. The system features an additional option for dosing the powder into the mixing unit. Through the use of an additional pressure container it is possible to have two different types of powder to be mixed into the mixing tank. The powder is loaded by any means, e.g manually, by screw conveyor, by vibration conveyor, by rotary valves, by gavity, by pneumatic transport etc. The powder is loaded as a batch or into two or more pressure containers using the principle of one of the pressure container working in switching mode, where one pressure container is been filled while the other pressure container is unloaded / emptied.

In a further embodiment of the system, the mixing tank comprises circulation means arranged in the lower part for stirring the liquid mixture inside the mixing tank. The circulation means is arranged to induce circulation of the liquid inside the mixing tank. Circulation ensures that the powder is transported away from the injection point, which prevents unwanted formation of clumps in the mixing tank. The circulation means may be mechanical means in the form of an impeller driven by a motor. Through the use of an impeller a quicker and more uniform mixing of the powder is obtained. The impeller may be double flight ribbon impeller, straight blade impeller or axial impeller.

In a further embodiment of the system according to the first aspect of the present invention, the pipe line system interconnecting the mixing tank and the storage tank, the mixing tank constituting an inline mixer connected to the storage tank, the storage tank is provided with a liquid inlet and a liquid outlet, the mixing tank is provided with a liquid inlet and a liquid outlet, the pipe line system having a first pipe line with a first liquid inlet end and a first liquid outlet end, the first liquid inlet end is connected to the liquid outlet of the mixing tank and the first liquid outlet end is connected to the liquid inlet of the storage tank, the first transfer element is provided in the first pipe line. Through the use of a pipe line system with a first pipe line, the liquid mixture is transferred to a storage or transferred to a hydration tank, in which the liquid mixture is further processed.

In a further or alternative embodiment of the system a pipe line system, a second transfer element and the storage tank are provided, the pipe line system interconnecting the mixing tank and the storage tank, the mixing tank constituting an inline mixer connected to the storage tank, the storage tank is provided with a liquid inlet and a liquid outlet, the mixing tank is provided with a liquid inlet and a liquid outlet, the pipe line system further having a second pipe line with a second liquid inlet end and a second liquid outlet end, the second liquid inlet end is connected to the liquid outlet of the storage tank and the second liquid outlet end is connected to the liquid inlet of the mixing storage tank, the second transfer element is provided in the second pipe line. Through the use of a pipe line system with a second pipe line, the liquid mixture is returned to the mixing tank the liquid mixture may be further processed in the mixing tank.

In a further or alternative embodiment of the system the mixing tank has a liquid inlet provided in the upper part of the mixing tank. Through the use of a liquid inlet is it possible to add the liquid directly into the mixing tank or to add additional substance in to the mixture which is advantageous during production of food, agriculture or medicine.

According to specific mixing requirements, the first pressure level inside the pressure container is less than or equal to 40 bar and the second pressure level for transporting the powder into the mixing tank is less than 40 bar.

A qualitative test performed with the system resulted in the following capacities on whole milk powder (Standard quality).
- Pressure container (pressurized tank) at 1.6 bars rel. pressure 13 kg's through a 1½" hose 25 meters app. 5,000 to 6,000 kg/h into a mixer at atmospheric condition.
- Pressure container (pressurized tank) at 1.0 bars rel. pressure 14 kg's through a 1½" hose 25 meters app. 2,500 to 3,000 kg/h into a mixer at atmospheric condition.

Based on the above the capacity in a pressurized system is higher than in a traditional vacuum based system. The results show an expectation that a pressurized system will have the same powder capacity in a pipe dimension of 1 to 2 sizes smaller than a vacuum based system.

According to a second aspect of the invention, the powder valve preferable for injecting powder into a liquid in a mixing system, the powder valve comprises a valve housing, a valve seat, a resilient member, a gasket and a valve closing body, the resilient member substantially surrounding the valve closing body, the resilient member is positioned between the valve closing body and the valve housing, the valve closing body comprises an elongated member being slidable in relation to the valve housing, the elongated member having a substantially cylindrical shape with a blind in one end, the valve closing body having an aperture in the radial direction adjacent to the blind. This provides a simple construction, which does not need any maintenance during operation.

In one embodiment of the powder valve according to a second aspect of the present invention preferable for injecting powder into a liquid in a mixing system,, the valve housing comprises a first housing member and a second housing member defining an axial direction, the first housing member having a flange for connecting the valve to the mixing arrangement, the first housing member comprises a connecting branch extending perpendicular to the axial direction, the first housing member and the valve closing body forming a flow channel for establishing a fluid communication with the connecting pipe. This allows the powder to be redirected towards the powder storage.

In a further or alternative embodiment of the powder valve preferable for injecting powder into a liquid in a mixing system, the valve closing body is positionable in a closed position, in which the aperture in the elongated member is positioned at the interior channel formed between the first housing member and the valve closing body and in an open position, in which the aperture in the elongated member is moved in the axial direction relative to the first housing member.

In a third aspect of the invention, the invention discloses a method for supplying powder and mixing the powder into the liquid, which comprises the following steps:
- establishing the a first pressure level inside the pressure tank,
- establishing the second pressure level inside the mixing tank, the first pressure level being above the second pressure level,
- the mixing tank has a pressure relief valve for preserving at a second pressure level inside the mixing tank, the second pressure level being lower than the first pressure level,
- opening the powder valve for allowing the pressurized air to be utilized for transporting the powder from the pressure container to the mixing tank, and injecting powder directly into the mixing tank.

In accordance with the method according to the third aspect of the invention, the invention discloses a method, where the powder being dosed from the pressure container by regulating the pressure difference between the pressure tank and the mixing tank, in which the mixing tank constitutes a batch mixer, inline mixer or continuous mixer.

In an embodiment of the method according to the third aspect of the invention, the invention discloses a method for supplying powder and mixing the powder into the powder according to claim 13, further having any of the features of the system according to any of the claims 2-9 and/or any of the features of the valve according to any of the claims 10-12.

The distance between the pressure container and the mixing tank is up to 1.000 meters. The powder flow is controlled by normal means, e.g. lost weight or flow meter by regulating the pressure difference between pressure container and the mixing tank.

The method for supplying powder into a mixing tank could furthermore comprise the step of activating the pressure relief valve for maintaining a pressure inside the mixing below a threshold valve.

The method for supplying powder into a mixing tank could furthermore comprise the step of having the powder flow controlled by regulating the pressure difference between the pressure tank and the mixing tank.

Dosing from the pressure tank is done by regulating the pressure difference between the pressure tank and the mixing tank. The mixing tank can work as a batch mixer, inline mixer or continuous mixer.

The term "CIP" refers to Cleaning in place. It is advantageous to have a design, where cleaning can be done without dismantling equipment. The system is designed to avoid treating the surfaces with chemical solutions, cleaning fluids and rinsing water and circulation within the system.

The term "in fluid communication" should in this context mean that the powder is transferred into the liquid. The powder will be injected into the mixing tank, in which the powder will come in contact with the liquid inside the mixing tank, as the powder valve is connected to the mixing tank.

### DETAILED DESCRIPTION

The invention will now be explained in detail with reference to the schematic drawings in which:
Fig. 1 is an overall schematic and partly cut-away view of a first a presently preferred embodiment of a system for supplying powder and mixing the powder into a liquid according to a first aspect of the present invention,
Fig. 2 is a view similar to the view of Fig. 1 of a further and compared to the first and presently preferred embodiment of the system according to the present invention more elaborated and complex embodiment,
Figs. 3A and 3B are vertical sectional views of a powder valve according to a second aspect of the present invention illustrating the powder valve in two distinct operational positions, and
Figs. 4A and 4B are perspective and partly cut-away views of the first embodiment of the powder valve also shown in Fig. 3A in the two distinct operational positions of Figs. 3A and 3B, respectively.

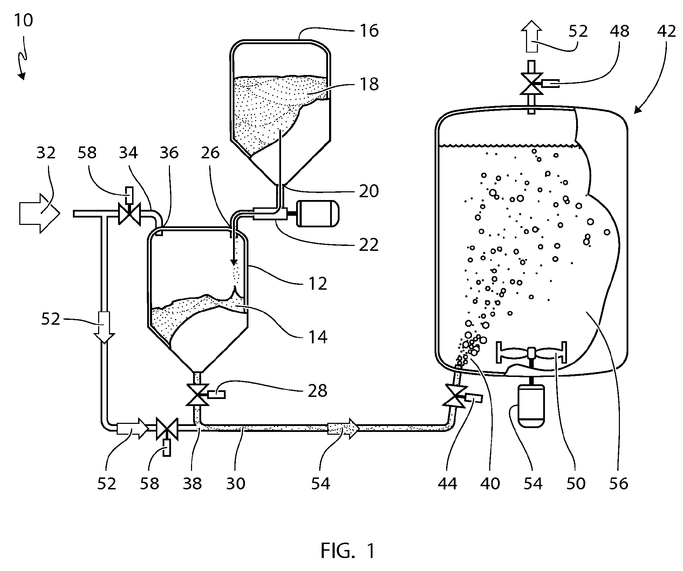

In figure 1 a first and presently preferred embodiment of a system for supplying powder and mixing the powder into a liquid is shown designated the reference numeral 10 in its entirety. The system 10 comprises a pressure container 12 including the powder 14. The powder is supplied from a powder tank 16 also including the powder designated the reference numeral 18. The powder tank 16 has a bottom outlet 20 communicating with a first pipe 22, the access of powder 18 from the powder tank 16 into the first pipe 22 is controlled by a dosing unit 24.

The pressure container 12 further comprises a powder inlet 26 communicating with the powder tank 16. The powder inlet 26 can comprise an inlet valve and the valve is used for controlling the in-flow of powder into the pressure container. The dosing unit is used for adjusting the amount of powder 14 inside the pressure tank 12. The powder tank 16 is depicted as an enclosed tank, but could also be implemented as a funnel in fluid contact with the surrounding. The powder 14 is introduced into other way than through the use of a powder tank 16, bottom outlet 20 and dosing unit 24 depicted in figure 1. One example is to allow the powder to be manually supplied into the pressure tank thereby reducing the complexity of the system.

The pressure container 12 further comprises a powder outlet 28, through which the powder 14 inside the pressure container 12 communicates with a connecting pipe 30. The powder outlet is positioned in the lower part of the pressure container, preferably in the bottom part of the pressure container 12.

The connecting pipe 30 connected to a pressurizing source is indicated by an arrow 32 in the figures. The pressurizing source is an air compressor, which is used for pressurizing the interior of the pressure container 12. The pressurizing source is connected to an air inlet 36 of the pressure container 12 through a first branch pipe 34. The pressurized air from the pressurizing source enters the interior of the pressure container 12 and a first pressure level within the pressure container 12, the first pressure level is maintained in operation of the system 10.

The first branch pipe 34 is connected to the connecting pipe 30. The first branch pipe 34 is illustrated as a T-shaped interconnection. The first branch pipe is part of the connecting pipe 30.

The connecting pipe 30 has a powder inlet end 38 and a powder outlet end 40. The powder inlet end 38 of the connecting pipe 30 is connected to the powder outlet 28 of the pressure container 12 and the powder outlet end 40 of the connecting pipe 30 is connected to the mixing tank 42. The connecting pipe 30 allows pressurized air to be utilized for transporting the powder 14 from the pressure container 12 to the mixing tank 42 through the connecting pipe 30. As seen in figure 1, the powder outlet 28 is connected to an openable/closable valve 44 of any known type, as the valve is used for opening and closing of the amount of powder 14, which is transferred from the pressure container 12 to the mixing tank 42.

An openable/closable powder valve 44 is provided and arranged between the powder outlet end 40 and the mixing tank 42. The powder valve 44 constitutes an inlet port to the mixing tank 42. The powder valve 44 is in fluid communication with the interior of the mixing tank 42 and the powder valve 44 is positioned at the lower part of the mixing tank 42. The powder valve 44 is intended to be positioned below the liquid level in the mixing tank 42. The powder valve 44 injects the powder 14 directly into the liquid/liquid mixture 52 contained in the mixing tank 42.

The mixing tank 42 has a pressure relief valve 48 for preserving a second pressure level inside the mixing tank 42, as the pressure relief valve ensures that the second pressure level is kept below the first pressure level.

The mixing tank 42 further comprises an impeller 50 arranged in the lower part, e.g. the bottom part of the container, for stirring the liquid mixture 50 inside the mixing tank 42. The impeller 50 is driven by a motor 54.

As illustrated in principal drawing of figure 1, the powder is loaded into a pressure container 12. The pressurizing source pressurizes the pressure container 12 with air. When the powder valve 44 is open into the mixing tank 42, the mixture of air and powder will flow into the mixing tank 42. The airflow will transport the powder 14 from the pressure container 12 into the mixing tank 42. The liquid mixture 56 inside the mixing tank 42 will entrap the powder 14, and the liquid in the mixing tank will separate the powder 14 from the air 52. The air 52 will pass through the liquid and out into the surroundings through the pressure relief valve 48 arranged at the upper part of the mixing tank 42. The mixing tank 42 and impeller 50 will constitute a mixer, which will make a dispersion, emulsification solution of the powder in the liquid.

The powder 14 is dosed continuously from e.g. a silo, a big-bag or the like into the pressure container 12. In order to facilitate continuously dosing of the powder it is necessary to control/regulate pressure difference between the mixing tank 42 and the pressure container 12, e.g. weight, level sensor. Through the use of valve interconnected into the connecting pipe 30 it is also possible to control the different pressure levels in the system. The mixing tank 42 can work, e.g. as a batch mixer, an inline mixer or a continuous mixer.

It should be noted that the mixing tank 42 is not illustrated with any outlet of the sake for simplicity, but the liquid mixture 56 will evidently need to be able to be transferred from the mixing tank 42 through a not shown outlet in the mixing tank 42.

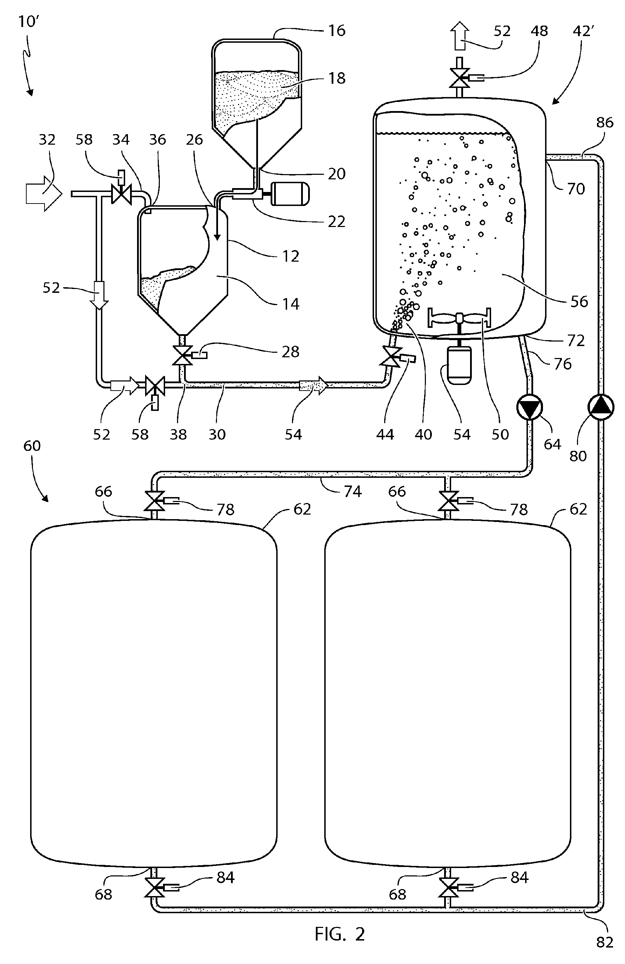

Figure 2 illustrates an embodiment of the system shown in figure 1, in which the system 10' is more elaborated and complex.

In the below description, components and elements identical to components and elements, respectively, described above are designated the same reference numerals as used above. Components or elements serving the same purpose as components and elements described above, however, differing from the previously described components or elements, respectively, are designated the same entity, however, added the marking "X'" for identifying the geometrical difference and also through the use of the same entity identifying the identical function as the previously described component or element.

The system 10' furthermore comprises a pipe line system 60 for transferring the liquid mixture into one or more storage tanks 62 using a first transfer element 64. The pipe line system 60 is interconnecting the mixing tank 42' and the storage tank 62, and the mixing tank 42 constituting an inline mixer connected to the storage tank 62. The storage tank 60 is provided with a liquid inlet 66 and a liquid outlet 68. The mixing tank 42' is provided with a liquid inlet 70 and a liquid outlet 72. The pipe line system 60 has a first pipe line 74 with a first liquid inlet end 76 and a first liquid outlet end 78, the first liquid inlet end 76 is connected to the liquid outlet of the mixing tank 72 and the first liquid outlet end 78 is connected to the liquid inlet 66 of the storage tank 62. As the system has two storage tanks, it is evident that each storage tank 62 comprises a liquid inlet 66. The first transfer element 64 is arranged in the first pipe line 74. The first transfer element 64 is a pump or the like.

In figure 2, the pipe line system 60 is further interconnecting the mixing tank 42' and the storage tanks 62, the mixing tank 42' constituted an inline mixer connected to the storage tanks 62, the pipe line system 60 further has a second pipe line 82 with a second liquid inlet end 84 and a second liquid outlet end 86. As the system has two storage tanks, it is evident that each storage tank 62 comprises a liquid outlet 68. Each second liquid inlet end 84 is connected to the respective liquid outlet 68 of the storage tanks 62. Each second liquid outlet ends 86 is connected to the liquid inlet 70 of the mixing tank 42'. The second transfer element 80 is provided in the second pipe line 82.

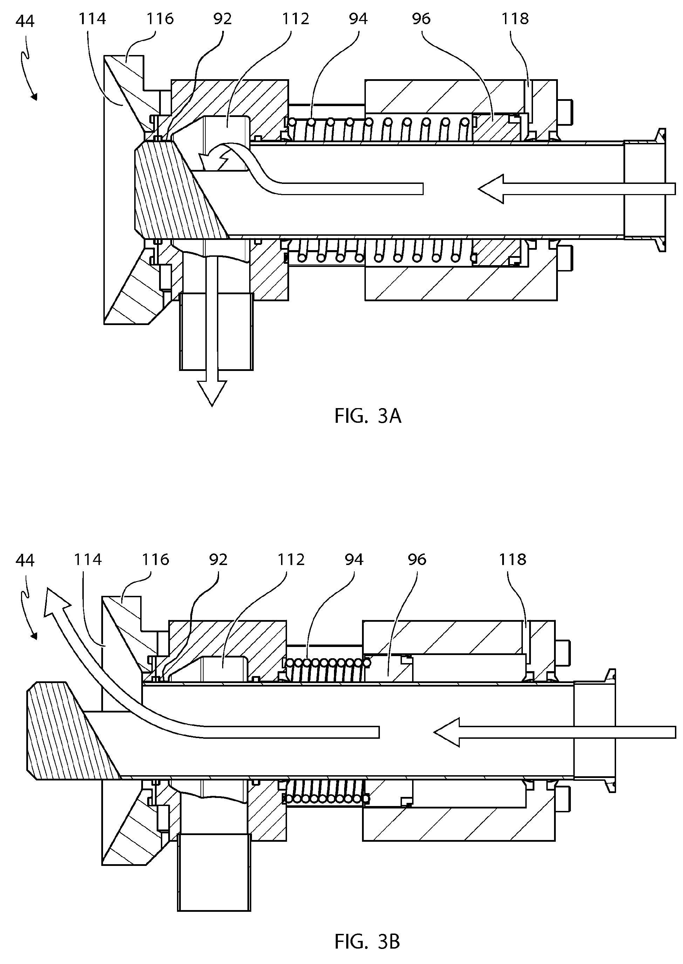

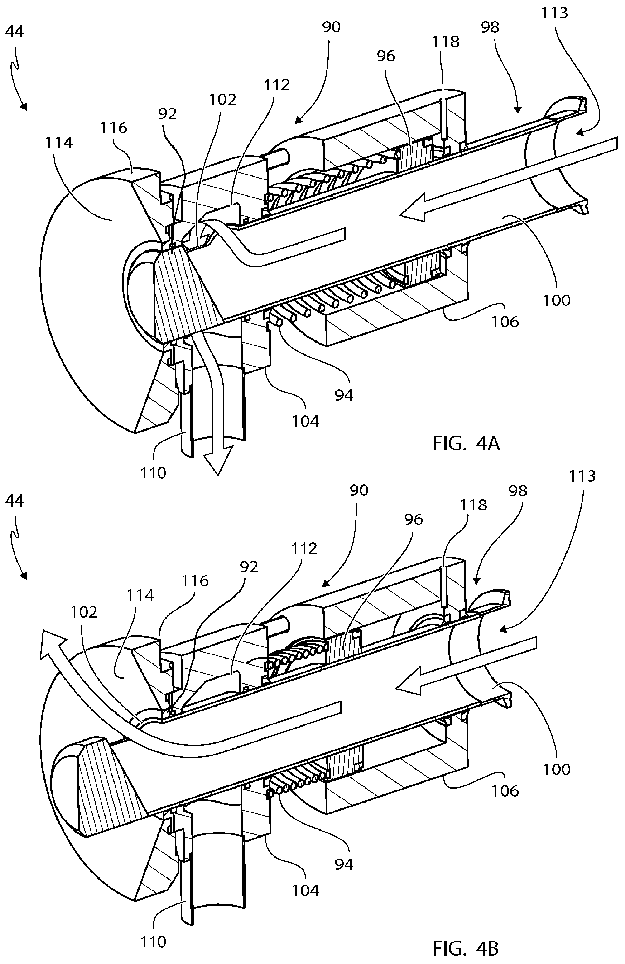

In figures 3A-3B and 4A-4B a presently preferred embodiment of the powder valve according to the present invention for supplying powder into a liquid is shown designated the reference numeral 44 in its entirety. The powder valve 44 comprises a valve housing 90, a valve seat 92, a resilient member 94, a gasket 96 and a valve closing body 98. The resilient member 94 substantially surrounding the valve closing body 98 and the resilient member 94 is positioned between the gasket 96, the valve closing body 98 and the valve housing 90. The resilient member 94 is shown in the form of a spring. The gasket 96 is fixed to the valve closing body 98. The valve closing body 98 comprises an elongated member 100 being slidable in relation to the valve housing 90, the elongated member 100 has a substantially cylindrical shape with a blind 101 at one end. The valve closing 98 body has an aperture 102 in the radial direction adjacent to the blind 101.

The valve housing 90 comprises a first housing member 104 and a second housing member 106 defining an axial direction. The resilient member 94 is arranged and restricted between the first housing member 104 and the second housing member 106. The first housing member 104 has an interior funnel geometry 114 and a flange 116 for connecting the powder valve 44 to the mixing tank 44. In figure 3A-4B the first housing member 104 has a separate flange 116, and the interior funnel geometry 114 is formed in the flange 116.

The first housing member 104 comprises a connecting branch 110 extending perpendicular to the axial direction, and the first housing member 104 and the valve closing body 98 form a flow channel 113 for establishing a fluid communication with the connecting pipe (not shown in figure 3A-4B).

In figures 3A and 4A, the powder valve 44 is depicted in a closed position in which the valve closing body is positioned in a closed mode. In the closed position, the aperture 102 in the elongated member 100 is positioned at the interior channel 112 formed between the first housing member 104 and the valve closing body 98. The powder/powder mixture flow is indicated by the arrows and figures 3A-4B show that the powder will be directed via the connecting branch 110 into a return system. By returning the powder a continuous flow of powder is maintained in the system.

In figures 3B and 4B, the powder valve 44 is depicted in an open position, in which the valve is positioned in an open mode. In the open position, the aperture 102 in the elongated member 100 is positioned in the funnel 114 of the first housing member 104. The powder / powder mixture flow is indicated by the arrow in figures 3B and 4B. The powder will flow through the elongated member 100 into the mixing tank (not shown in figure 3A-4B).

The powder valve 44 is formed with a valve seat housing 90 has an air inlet 118. A pressurizing source is connected to the powder valve 44 and compressed air is feed through the air inlet 118. The air inlet is arranged in the second housing member 106. The air pressure forced the gasket 96 to be moved in the axial direction of the second housing member 106. As the gasket 96 is connected in a fixable manner, the valve closing body 98, a movement of the gasket 96 in the axial direction of the valve housing will result in a movement of the valve closing body 98.

As air is forcing the gasket 96 in the axial direction towards the first housing member 104, the resilient member 94 is being arranged between the first housing member 104 and the second housing member 106 and is compressed due to the force acting on the gasket and thereby the gasket 96.

In an intermediate position between a closed and open position of the powder valve 44, the aperture 102 of the elongated member 108 will be moved from its position in the interior channel 112 into the open position of the valve, in which the aperture 102 of the elongated member 108 is moved in the axial direction in relation to the first housing member 104, whereby the powder can flow through the flow channel 113 of the valve closing body 98 into the mixing tank.

Using the connecting branch 110, air is directed into the interior channel 112 formed between the first housing member 104 and the valve closing body 98, this allows the powder valve 44 to be cleaned without additional dismantling and subsequent manual cleaning. The powder valve 44 has a layout, which allows the powder valve to be cleaned using the CIP (cleaning in place) principal.

In the intermediate position, air is used to clean the valve seat 92, as airflow is directed over the valve seat 92, in which any remaining deposits of powder will be flushed away due to the air flow.

The powder will flow into the mixing tank due to the pressure difference between the first pressure level inside the pressure tank and second pressure level inside the mixing tank, as the first pressure level is above the second pressure level.

The powder valve 44 has a valve closing body 98 which may be rotated around its axial direction. As shown in the figures 3B and 4B, the valve closing body 98 has a blind 101 at one end. The blind 101 is formed with an angle between 30 degree and 60 degree. By having a valve closing body 98 with a blind end formed with an internal angle wall, the powder and/or powder mixture is injected and directed in any desired direction inside the mixing tank by rotating the valve closing body 98.

Continuous mixing is where one or more liquids are dosed by e.g. flow meter into the mixing tank and powder is dosed continuously into the mixing tank.

The level in the mixing tank is kept constant by removing liquid from the mixing tank. The liquid mixture is removed from the mixing tank, but not limited to be used for e.g. up stream pasteurization.

In figure 1, the mixing tank works as a batch mixer. The powder is loaded as a batch or into two or more pressure containers using the principle of one of the pressure containers working in switching mode, where one pressure container is being filled while the other pressure container is unloaded / emptied.

The mixing tank shown in figure 2 works as an inline mixer. An inline mixer is a mixer connected to one or more tanks, in which a relatively small mixer is connected to one or more tanks, e.g. large hydration tanks.

The liquid is circulated from the tank to the mixing tank or mixer. During the circulation, powder is transferred into the mixing tank or mixer. Typical one tank in preparation, in which powder is added, and the second tank, which is already mixed, and being processed upstream, e.g. through a pasteurizer.

Through the use of a relative small mixer (inline mixer), it is possible to mix relative large quantities by circulation of the liquid between the inline mixer and the tank(s).

### REFERENCE NUMBERS

- System: 10, 10'
- Pressure container: 12
- Powder: 14
- Powder tank: 16
- First pipe: 22
- Dosing unit: 24
- Powder inlet of the pressure container: 26
- Powder outlet of the pressure container: 28
- Connecting pipe: 30
- Pressurizing source: 32
- First branch pipe: 34
- Air inlet: 36
- Powder inlet end: 38
- Powder outlet end: 40
- Mixing tank: 42, 42'
- Powder valve: 44
- Air: 46
- Pressure relief valve: 48
- Impeller: 50
- Air: 52
- Powder mixture: 54
- Liquid mixture: 56
- Valve: 58
- Pipe line system: 60
- Storage tank: 62
- First transfer element: 64
- Liquid inlet for storage tank: 66
- Liquid outlet for storage tank:
- Liquid inlet for mixing tank:
- Liquid outlet for mixing tank:
- First pipe line: 74
- First liquid inlet: 76
- First liquid outet: 78
- Second transfer element: 80
- Second pipe line: 82
- Second liquid inlet: 84
- Second liquid outet: 86
- Valve housing: 90
- Valve seat: 92
- Resilient member: 94
- Gasket: 96
- Valve closing body: 98
- Elongated member: 100
- Blind: 101
- Aperture: 102
- First housing member: 104
- Second housing member: 106
- Connecting branch: 110
- Interior channel: 112
- Flow channel: 113
- Funnel: 114
- Flange: 116

## Claims

1. A system for supplying powder and mixing said powder into a liquid comprising a pressure container, a pressurizing source and a mixing tank,
- said pressure container comprising an powder inlet and a powder outlet, said pressure container further comprising an air inlet for receiving pressurized air from said pressurizing source to enter the interior of said pressure container for maintaining a first pressure level within said pressure container,
- said mixing tank having a pressure relief valve for preserving a second pressure level inside said mixing tank, said second pressure level being lower than said first pressure level,
- a connecting pipe being provided and having a powder inlet end and a powder outlet end, said powder inlet end being connected to said pressure container and said powder outlet end being connected to said mixing tank, said connecting pipe allows pressurized air to be utilized for transporting said powder from said pressure container to said mixing tank through said connecting pipe,
- an openable/closable powder valve being provided and arranged between said powder outlet end and said mixing tank and constituting an inlet port to said mixing tank, and
- said powder valve being in fluid communication with the interior of said mixing tank, and being positioned at the lower part of said mixing tank, said powder valve being used for injecting said powder directly into said liquid contained in said mixing tank.

2. The system according to claim 1, a powder tank for storage of said powder being provided and connected to said the pressure container.

3. The system according to claim 2, a dosing unit being provided and arranged between said powder tank and said pressure container for adjusting the powder ratio inside said pressure container.

4. The system according to any proceeding claims, an additional pressure container being provided and arranged between said pressure container and said mixing tank, said pressure container including two different types of powders or said additional pressure container constituting a buffer tank.

5. The system according to any proceeding claims, said mixing tank comprising circulation means arranged in the lower part for stirring said liquid mixture inside said mixing tank.

6. The system according to any proceeding claims, a pipe line system, a first transfer element and a storage tank further being provided,
- said pipe line system interconnecting said mixing tank and said storage tank, said mixing tank constituting an inline mixer connected to said storage tank,
- said storage tank being provided with a liquid inlet and a liquid outlet,
- said mixing tank being provided with a liquid inlet and a liquid outlet,
- said pipe line system having a first pipe line with a first liquid inlet end and a first liquid outlet end, said first liquid inlet end being connected to said liquid outlet of said mixing tank and said first liquid outlet end being connected to said liquid inlet of said storage tank,
- said first transfer element being provided in said first pipe line.

7. The system according to claim 6, a pipe line system, a second transfer element and said storage tank being provided,
- said pipe line system interconnecting said mixing tank and said storage tank, said mixing tank constituting an inline mixer connected to said storage tank,
- said storage tank being provided with a liquid inlet and a liquid outlet,
- said mixing tank being provided with a liquid inlet and a liquid outlet,
- said pipe line system further having a second pipe line with a second liquid inlet end and a second liquid outlet end, said second liquid inlet end being connected to said liquid outlet of said storage tank and said second liquid outlet end being connected to said liquid inlet of said mixing storage tank,
- said second transfer element being provided in said second pipe line.

8. The system according to any proceeding claims, said mixing tank having a liquid inlet being provided in the upper part of said mixing tank.

9. The system according to any proceeding claims, said first pressure level inside the pressure container being less than or equal to 40 bar and said second pressure level for transporting the powder into the mixing tank being less than 40 bar.

10. A powder valve for injecting powder, said powder valve comprising a valve housing, a valve seat, a resilient member, a gasket and a valve closing body, said resilient member substantially surrounding said valve closing body, said resilient member being positioned between said valve closing body and said valve housing, said valve closing body comprising an elongated member being slidable in relation to said valve housing, said elongated member having a substantially cylindrical shaped with a blind in one end, said valve closing body having an aperture in the radial direction adjacent to said blind,

11. A powder valve for injecting powder according to claim 11, said valve housing comprising a first housing member and an second housing member defining an axial direction, said first housing member having a flange for connecting said valve to the mixing tank, said first housing member comprising a connecting branch extending perpendicular to said axial direction, said second housing member and said valve closing body forming a flow channel for establishing a fluid communication with said connecting pipe.

12. A powder valve for injecting powder according to claim 11, said valve closing body being positionable in a closed position, in which said aperture in said elongated member is positioned at the interior channel formed between said first housing member and said valve closing body and in an open position, in which said aperture in said elongated member is moved in the axial direction relative to the first housing member.

13. A method for supplying powder and mixing said powder into a liquid, which comprises the following steps:
- establishing said a first pressure level inside the pressure tank,
- establishing said second pressure level inside said mixing tank, said first pressure level being above said second pressure level,
- said mixing tank has a pressure relief valve for preserving at a second pressure level inside said mixing tank, said second pressure level being lower than said first pressure level,
- opening said powder valve for allowing said pressurized air to be utilized for transporting said powder from said pressure container to said mixing tank, and injecting powder directly into the mixing tank.

14. A method according to claim 13, said powder being dosed continuously from said pressure container by regulating the pressure difference between said pressure tank and said mixing tank, in which said mixing tank constituting a batch mixer, inline mixer or continuous mixer.

15. The method for supplying powder and mixing said powder into a liquid according to claim 13, further having any of the features of the system according to any of the claims 2-9 and/or any of the features of the valve according to any of the claims 10-12.
